(19) Europäisches Patentamt
European Patent Office
Office européen des brevets

(11) **EP 4 625 347 A1**

(12) **EUROPEAN PATENT APPLICATION**
published in accordance with Art. 153(4) EPC

(43) Date of publication:
**01.10.2025 Bulletin 2025/40**

(21) Application number: **23902356.7**

(22) Date of filing: **06.11.2023**

(51) International Patent Classification (IPC):
*G06V 10/40* *(2022.01)*

(52) Cooperative Patent Classification (CPC):
**G06N 3/0464; G06N 3/048; G06N 3/08;
G06V 10/40; G06V 10/80; G06V 10/82**

(86) International application number:
**PCT/CN2023/129884**

(87) International publication number:
**WO 2024/125156 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 CN 202211604986**

(71) Applicant: **Huawei Technologies Co., Ltd.
Shenzhen, Guangdong 518129 (CN)**

(72) Inventors:
• **ZHANG, Jian
  Shenzhen, Guangdong 518129 (CN)**
• **ZHONG, Zhao
  Shenzhen, Guangdong 518129 (CN)**
• **BAI, Bo
  Shenzhen, Guangdong 518129 (CN)**
• **LI, Ruihua
  Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **FEATURE EXTRACTION UNIT, FEATURE EXTRACTION METHOD, AND RELATED DEVICE**

(57)    This application provides a feature extraction unit, a feature extraction method, and a related device, and relates to the image processing field. The feature extraction unit includes a first nonlinear activation function layer, a first convolution layer, at least one second convolution layer, and at least one third convolution layer. The first nonlinear activation function layer is located between the at least one second convolution layer and the at least one third convolution layer. The first convolution layer is configured to perform feature extraction on an input first feature map to obtain a second feature map, where a size of a convolution kernel of the first convolution layer is greater than or equal to 7. A third feature map is sequentially processed to obtain a fourth feature map by using the at least one second convolution layer, the first nonlinear activation function layer, and the at least one third convolution layer, where the third feature map is obtained by adding the first feature map and the second feature map. An output of the feature extraction unit is a feature map obtained by adding the third feature map and the fourth feature map. The feature extraction unit uses a large-scale convolution kernel. This can effectively improve a receptive field of the feature extraction unit.

FIG. 3A

## Description

This application claims priority to Chinese Patent Application No. 202211604986.4, with the China National Intellectual Property Administration on December 14, 2022 and entitled "FEATURE EXTRACTION UNIT, FEATURE EXTRACTION METHOD, AND RELATED DEVICE", which is incorporated herein by reference in its entirety.

## TECHNICAL FIELD

Embodiments of this application relate to the image processing field, and in particular, to a feature extraction unit, a feature extraction method, and a related device.

## BACKGROUND

A pixel-level deep neural network is a deep neural network used to process pixel-level tasks, and the pixel-level tasks include denoising, deblurring, super-resolution, and the like. An objective of the pixel-level neural network is to implement a mapping from a pixel value to a pixel value by training a network parameter, in other words, an input of a finally network obtained through training is an image, and an output is also an image. In this way, functions such as noise reduction, demosaicing, deblurring, and super-resolution can be implemented based on different training data.

A receptive field (Receptive Field) is used to indicate sizes of receptive ranges of different neurons in a network on an original image, or a size of a region to which a pixel in a feature map output at each layer of a convolutional neural network is mapped on an original image. A larger value of the neuron receptive field indicates a larger range of an original image that can be touched by the neuron receptive field, and indicates that a feature that is more global and has a higher semantic level is included. On the contrary, a smaller value indicates that a feature included in the neuron receptive field tends to be local and detailed.

In a conventional technology, the pixel-level deep neural network has a small receptive field, resulting in poor performance of the pixel-level deep neural network. Therefore, the foregoing technical problem urgently needs to be resolved.

## SUMMARY

This application provides a feature extraction unit, a feature extraction method, and a related device, to improve a receptive field of the feature extraction unit, thereby improving performance of an image processing model that uses the feature extraction unit.

According to a first aspect, a feature extraction unit is provided.

The feature extraction unit includes a first nonlinear activation function layer, a first convolution layer, at least one second convolution layer, and at least one third convolution layer. The first nonlinear activation function layer is located between the at least one second convolution layer and the at least one third convolution layer. The first convolution layer is configured to perform feature extraction on an input first feature map to obtain a second feature map, where a size of a convolution kernel of the first convolution layer is K*K, and K is greater than or equal to 7. A third feature map is sequentially processed to obtain a fourth feature map by using the at least one second convolution layer, the first nonlinear activation function layer, and the at least one third convolution layer, where the third feature map is obtained by adding the first feature map and the second feature map; and An output of the feature extraction unit is a feature map obtained by adding the third feature map and the fourth feature map.

Compared with the conventional technology in which a small-scale convolution layer is used, resulting in a small receptive field of feature extraction, and poor processing performance of a model, in this application, the size of the convolution kernel of the first convolution layer is K*K, K is greater than or equal to 7, and a large-scale convolution kernel can be used to effectively improve a receptive field of the feature extraction unit, thereby improving performance of an image processing model that uses the feature extraction unit. In addition, the feature extraction unit has a simple network structure and is easy to implement. Further, in this application, a convolutional neural network architecture is used, and model hardware deployment is friendly, so that the model is more easily applied to a terminal side.

With reference to a possible implementation of the first aspect, the first convolution layer is a depthwise separable convolution layer or a group convolution layer.

The depthwise separable convolution layer or the group convolution layer can effectively reduce a computing amount and a quantity of parameters, to reduce computing power consumption. In this application, a specific form of the first convolution layer may be set based on a computing power limitation of specific hardware.

With reference to a possible implementation of the first aspect, the feature extraction unit further includes a second nonlinear activation function layer. The second nonlinear activation function layer is located in a location of at least one of the following: before the first convolution layer, after the first convolution layer, before the at least one second convolution layer, between any two of the at least one second convolution layer, after the at least one third convolution layer, or between any two of the at least one third convolution layer.

Therefore, in this application, to further improve fitting effect of a network, the second nonlinear activation function layer may be inserted between any layers of the feature extraction unit.

With reference to a possible implementation of the first aspect, the feature extraction unit further includes a normalization layer. The normalization layer is located in a location of at least one of the following: before the first convolution layer, after the first convolution layer, before the at least one second convolution layer, after the at least one second convolution layer, between any two of the at least one second convolution layer, before the at least one third convolution layer, after the at least one third convolution layer, or between any two of the at least one third convolution layer.

Therefore, in this application, to prevent gradient explosion and gradient disappearance, the normalization layer may be set in any location in the feature extraction unit based on an actual requirement.

According to a second aspect, this application further provides an image processing model. The model includes a fourth convolution layer and at least one feature map processing network connected in series. The feature map processing network includes at least one feature map extraction unit connected in series, and the feature map extraction unit is the feature extraction unit in the first aspect.

The fourth convolution layer is configured to receive a first image and perform feature extraction on the first image to obtain a fifth feature map. The at least one feature map processing network connected in series is configured to process the fifth feature map to obtain a sixth feature map. An output of the image processing model is a seventh feature map, and the seventh feature map is a feature map obtained by adding the fifth feature map and the sixth feature map

Therefore, in this application, the feature extraction unit whose receptive field is improved is applied to the image processing model, to improve performance of the image processing model. For example, a function implemented by the image processing model may include at least one of the following: noise reduction, demosaicing, deblurring, and super-resolution.

With reference to a possible implementation of the second aspect, the image processing model further includes a first upsampling layer, configured to perform upsampling processing on the seventh feature map to obtain a second image.

Upsampling is actually scaling up an image, and refers to any technology that can make resolution of the image higher. Implementation methods of upsampling include deconvolution (Deconvolution, also referred to as transposed convolution), an uppooling (UnPooling) method, bilinear interpolation (various interpolation algorithms), and pixel unshuffle (Pixel Unshuffle). In this application, when resolution of an input image and resolution of an output image of the image processing model are different, the resolution of the image may be improved by using the first upsampling layer.

With reference to a possible implementation of the second aspect, when the at least one feature map processing network connected in series is at least two feature map processing networks connected in series, the model further includes at least one downsampling layer and at least one second upsampling layer, and a quantity of downsampling layers is the same as a quantity of second upsampling layers.

One downsampling layer or one second upsampling layer is after the feature map processing networks.

Actually, a main purpose of downsampling is to reduce a spatial scale of the feature map. Therefore, in this application, the at least one downsampling layer can be set to reduce a computing amount of a feature map processing block after the downsampling layer. Correspondingly, the second upsampling layer further needs to be set to restore a downsampled image to an original size, so that sizes of the output image and the input image remain unchanged.

With reference to a possible implementation of the second aspect, the image processing model further includes at least one cross-layer connection, and the cross-layer connection is used to add and fuse feature maps of a same size in the model.

Therefore, in this application, the cross-layer connection is set to add and fuse the feature maps of the same size in the image processing model, to reduce training difficulty of an intermediate layer of the model.

With reference to a possible implementation of the second aspect, the feature map processing network further includes a fifth convolution layer, the fifth convolution layer is configured to perform feature extraction processing on an eighth feature map, and the eighth feature map is a feature map obtained by adding a feature map output by the at least one feature map extraction unit connected in series and a feature map input into the feature map processing network.

Therefore, in this application, the fifth convolution layer is set in the feature map processing network to extract a small-scale feature, so that the image processing model can perceive a large-scale feature and the small-scale feature, thereby effectively improving model effect.

According to a third aspect, this application further provides a feature extraction method, where the method includes the following steps:

receiving a first feature map; performing feature extraction on the first feature map to obtain a second feature map by using a first convolution layer, where a size of a convolution kernel of the first convolution layer is K*K, and K is greater than or equal to 7; sequentially processing a third feature map to obtain a fourth feature map by using at least one second convolution layer, a first nonlinear activation function layer, and at least one third convolution layer, where the third feature map is obtained by adding the first feature map and the second feature map; and outputting a feature map obtained by adding the third feature map and the fourth feature map.

Compared with the conventional technology in which a small-scale convolution layer is used, resulting in a small receptive field of feature extraction, and poor processing performance of a model, in this application, the size of the convolution kernel of the first convolution layer is K*K, K is greater than or equal to 7, and a large-scale convolution kernel can be used to effectively improve the receptive field of the feature extraction unit, thereby improving performance of an image processing model that uses the feature extraction method.

According to a fourth aspect, this application further provides an image processing method, and the method includes the following steps:

receiving a first image; performing feature extraction on the first image to obtain a fifth feature map by using a fourth convolution layer; processing the fifth feature map to obtain a sixth feature map by using at least one feature map processing network connected in series, where the feature map processing network includes at least one feature map extraction unit connected in series, and the feature map extraction unit is the feature extraction unit according to the first aspect; and determining a seventh feature map, where the seventh feature map is a feature map obtained by adding the fifth feature map and the sixth feature map.

Therefore, in this application, the feature extraction unit whose receptive field is improved is applied to the image processing model, to improve performance of the image processing model.

According to a fifth aspect, this application further provides an electronic device, including a processor and a memory. The processor is connected to the memory, the memory is configured to store program code, and the processor is configured to invoke the program code to perform the method according to the third aspect or the fourth aspect of the claims.

According to a sixth aspect, this application further provides a terminal device. The feature extraction unit according to the first aspect runs on the terminal device, or the model according to the second aspect runs on the terminal device.

According to a seventh aspect, this application further provides a computer-readable storage medium. The computer-readable storage medium stores a computer program. The computer program is executed by a processor, to implement the method according to the third aspect or the fourth aspect.

According to an eighth aspect, this application further provides a computer program product including instructions. When the computer program product runs on a computer, the computer is enabled to perform the method according to the third aspect or the fourth aspect.

According to a ninth aspect, this application further provides a chip system, including: a processor, configured to invoke a computer program from a memory and run the computer program, so that a communication device on which the chip system is installed performs the method according to the third aspect or the fourth aspect.

Optionally, in an implementation, the chip system may further include a memory, and the memory stores the computer program.

## BRIEF DESCRIPTION OF DRAWINGS

The following describes accompanying drawings used in embodiments of this application.

FIG. 1A is a diagram of dense convolution according to an embodiment of this application;
FIG. 1B is a diagram of group convolution according to an embodiment of this application;
FIG. 1C is a diagram of depthwise separable convolution according to an embodiment of this application;
FIG. 2 shows a system architecture according to an embodiment of this application;
FIG. 3A is a diagram of a structure of a feature extraction unit according to an embodiment of this application;
FIG. 3B is a diagram of a structure of another feature extraction unit according to an embodiment of this application;
FIG. 3C is a diagram of a structure of another feature extraction unit according to an embodiment of this application;
FIG. 3D is a diagram of a structure of another feature extraction unit according to an embodiment of this application;
FIG. 3E is a diagram of a structure of another feature extraction unit according to an embodiment of this application;
FIG. 3F is a diagram of a structure of another feature extraction unit according to an embodiment of this application;
FIG. 3G is a diagram of a structure of another feature extraction unit according to an embodiment of this application;
FIG. 4A is a diagram of a structure of an image processing model according to an embodiment of this application;
FIG. 4B is a diagram of training and deployment of a backbone network according to an embodiment of this application;
FIG. 4C is a diagram of a structure of another image processing model according to an embodiment of this application;
FIG. 4D is a diagram of a structure of ResBlock according to an embodiment of this application;
FIG. 5A is a diagram of a structure of another image processing model according to an embodiment of this application;
FIG. 5B is a diagram of a structure of another image processing model according to an embodiment of this application;
FIG. 5C is a diagram of a structure of another image processing model according to an embodiment of this application;

FIG. 5D is a diagram of a structure of another image processing model according to an embodiment of this application;

FIG. 6 is a schematic flowchart of a feature extraction method according to an embodiment of this application;

FIG. 7 is a schematic flowchart of an image processing method according to an embodiment of this application; and

FIG. 8 is a diagram of a structure of an electronic device according to an embodiment of this application.

## DESCRIPTION OF EMBODIMENTS

The following describes technical solutions of this application with reference to accompanying drawings.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses $x_s$ and an intercept of 1 as inputs. An output of the operation unit may be as follows:

$$h_{W,b}\left(\vec{x}\right) = f\left(W^T \vec{x}\right) = f\left(\sum\nolimits_{s=1}^{n} W_s x_s + b\right) \qquad (1\text{-}1)$$

s=1, 2, ..., and n, n is a natural number greater than 1, $w_s$ is a weight of $x_s$, $b$ is a bias of the neuron, and $f$ is an activation function (Activation Functions) of the neuron, and is for introducing a non-linear feature into the neural network, to convert an input signal in the neuron into an output signal. The output signal of the activation function may serve as an input of a next convolutional layer. The activation function may be a Sigmoid function, a ReLU function, or the like. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN looks to be quite complex, the DNN is actually not complex in terms of work at each layer, and is simply expressed as the following linear relationship expression: $\vec{y} = \alpha(W\vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha()$ is an activation function. At each layer, the output vector $\vec{x}$ is obtained by performing such a simple operation on the input vector $\vec{y}$. Because the DNN has a large quantity of layers, there are a large quantity of coefficients W and offset vectors $\vec{b}$. Definitions of these parameters in the DNN are as follows. The coefficient W is used as an example. It is assumed that in a DNN having three layers, a linear coefficient from the fourth neuron at the second layer to the second neuron at the third layer is defined as $w_{24}^3$. The superscript 3 indicates a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at a $L^{th}$ layer is defined as $W_{jk}^L$. It should be noted that the input layer does not have the parameters $W$. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Convolutional neural network

The convolutional neural network (CNN, Convolutional Neuron Network) is a deep neural network having a convolutional structure. The convolutional neural network includes a feature extractor including a convolutional layer and a sub-sampling layer. The feature extractor may be considered as a filter. A convolution process may be considered as performing convolution by using a trainable filter and an input image or a convolution feature plane (Feature Map). The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, the same image information obtained through learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

(4) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (Loss Function) or an objective function (Objective Function). The loss function and the objective function are important equations that measure the difference between the predicted value and the target value. The loss function is used as an example. A higher output value (Loss) of the loss function indicates a larger difference. Therefore, training of the deep neural network is a process of minimizing the Loss as much as possible.

(5) Back propagation algorithm

The convolutional neural network may correct a value of a parameter in an initial super-resolution model in a training process according to an error back propagation (Back Propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

(6) Dense convolution

Dense convolution (Dense Convolution) is a most classic convolution layer definition. For the dense convolution, each output feature map is obtained by performing a channel-by-channel convolution operation on each group of convolution kernels and an input feature map of each channel, and then performing a summation.

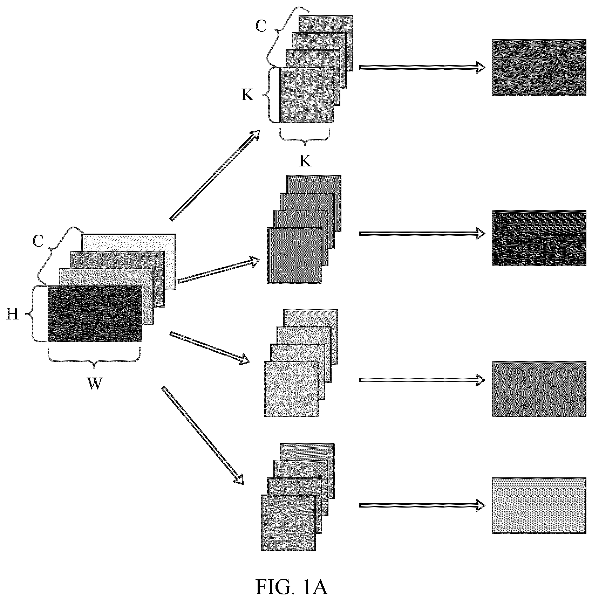

FIG. 1A is used as an example. FIG. 1A shows a feature map whose input is 4*H*W, and a 4*H*W feature output is obtained after a 4*4*K*K convolution kernel is processed.

A legend of C*H*W on the left of FIG. 1A represents an input feature map of a convolution layer, and C equals 4 in the legend. Each of four rows in the middle of FIG. 1A represents a group of convolution kernels, each group of convolution kernels is used to obtain one output feature map, and a shape of each group of convolution kernels is C*K*K. However, there are four rows in FIG. 1A, indicating that there are four output feature maps.

(7) Group convolution layer

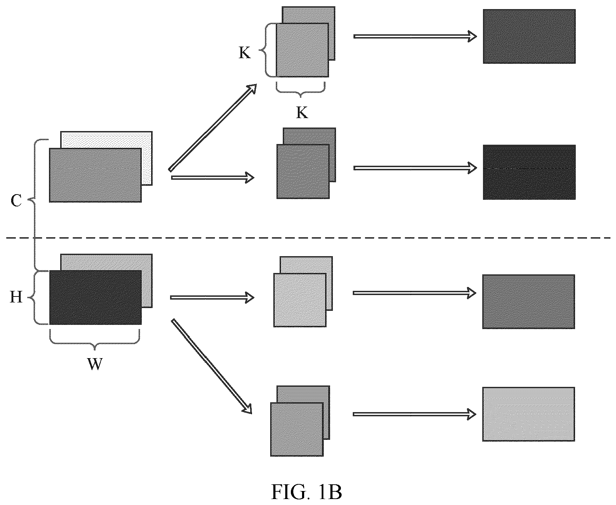

The group convolution (Group Convolution) layer is a convolution layer at which input feature maps and convolution kernels are grouped, and a convolution operation is performed in a corresponding group. FIG. 1B is an example of the group convolution compared with the foregoing dense convolution. For example, a quantity of groups herein is 2. It can be learned that shapes of an input and an output in the example in FIG. 1B do not change, but the input feature maps are grouped. For example, the input feature maps are divided into two groups, and the convolution kernels are correspondingly divided into two groups. During computing, each group is correspondingly computed.

An advantage of the group convolution is that a computing amount and a quantity of parameters are reduced. It can be learned that when a same output is obtained, a quantity of convolution kernels becomes half of that of the dense convolution, and the computing amount also becomes half of that of the dense convolution.

In addition, it can be learned that, compared with the dense convolution, there is no information exchange between groups for the group convolution, that is, there is no intersection between operations in an upper half region and a lower half region in FIG. 1B.

(8) Depthwise separable convolution layer

The depthwise separable convolution (Depthwise Separable Convolution) layer is a convolution layer at which an input feature map of each channel is independently processed by using a convolution kernel.

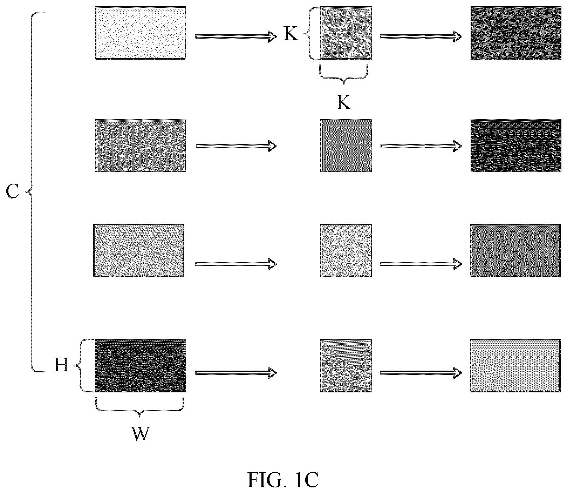

FIG. 1C is an example of the depthwise separable convolution. It can be learned that each channel independently has a group of convolution kernels to perform processing to obtain an output feature map.

In addition, the depthwise separable convolution may be considered as a special example of group convolution to some extent (that is, a quantity of groups is equal to a quantity of input channels, and a quantity of output channels is equal to the quantity of input channels). The depthwise separable convolution further reduces a computing amount and a quantity of parameters compared with the group convolution. In addition, there is no information exchange between channels during computing of the depthwise separable convolution.

(9) Normalization layer

The normalization (Normalization) layer has two functions: preventing gradient explosion and gradient disappearance. Normalization is also called normalization.

In a back propagation process of a neural network, a gradient of each layer is calculated by multiplying data (a feature map) of the layer by a gradient transmitted from an upper layer. However, data of the layer is normalized and is limited to a mean value zero, so that gradient explosion does not occur during multiplication.

In the back propagation process of the neural network, the gradient of each layer needs to be calculated by multiplying the gradient transmitted from the upper layer. If a gradient value of each layer is small, the gradient becomes increasingly smaller in the back propagation process. As a result, the gradient disappears. Therefore, the gradient can be avoided to be disappeared through normalization.

For example, the normalization layer includes a LayerNorm layer or a BatchNorm layer.

In the conventional technology, a pixel-level deep neural network is a deep neural network used to process pixel-level tasks, and the pixel-level tasks include denoising, deblurring, super-resolution, and the like. The pixel-level deep neural network has a small receptive field, resulting in poor performance of the pixel-level deep neural network. Therefore, the foregoing technical problem urgently needs to be resolved.

Based on the foregoing technical problem, this application provides a feature extraction unit that can improve a receptive field, thereby improving performance of an image processing model. For example, the feature extraction unit is used as a basic network structure unit, and the image processing model is obtained based on the basic network structure unit. For example, for different computing power limitations and hardware limitation rules, or based on a neural network search algorithm, basic network structure units are stacked and connected to form a complete neural network backbone network, and a specific pixel-level task is trained. Finally, a neural network structure obtained through training may be deployed on a terminal side or a cloud for application.

For example, the pixel-level deep neural network is widely applied to application such as a mobile phone terminal, a surveillance video, and a cloud service. For example, an AI enhancement function is built in a photographing function of the mobile phone, so that image quality can be greatly improved, and photographing and shooting effect can be enhanced. A core of the function is implemented based on the pixel-level deep neural network. For another example, in an application scenario of a smart city, some cameras having processing chips perform denoising and deblurring based on the pixel-level deep neural network, to improve imaging effect. In these application scenarios, the deep neural network is usually deployed on a terminal side (that is, a dedicated chip in a mobile phone or a camera). Embodiments of this application may be applied to these scenarios. In this embodiment of this application, an example of an application scenario is as follows: Application scenario 1: Replace a pixel-level deep neural network used for digital negative (RAW) domain image and video enhancement in a mobile phone. An input of the pixel-level network for the RAW-domain image and video enhancement is a RAW-domain image or video collected by a camera of the mobile phone, and an output is an enhanced RGB image or video. The image processing model in this embodiment of this application may be used to replace an original pixel-level deep neural network architecture, to improve imaging effect of a small model.

Application scenario 2: Replace a pixel-level deep neural network for denoising and deblurring a surveillance video. An input of the network is a surveillance video frame sequence, which is processed by the pixel-level neural network to implement functions of denoising and deblurring. The image processing model in this embodiment of this application may also replace the foregoing network.

Embodiment 1

The following describes a system architecture provided in embodiments of this application.

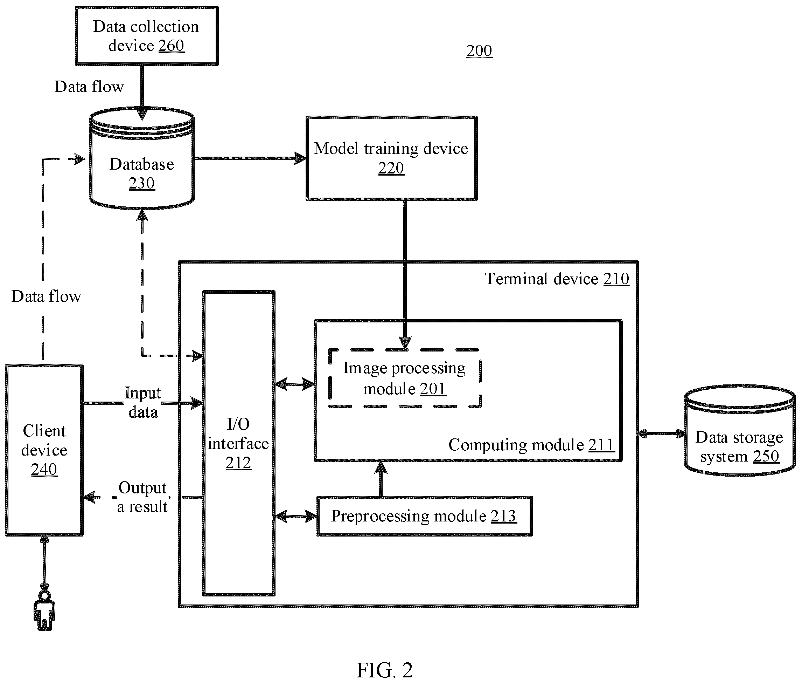

Refer to FIG. 2. An embodiment of this application provides a system architecture 200. As shown in the system architecture 200, a data collection device 260 is configured to collect training data. The training data in this embodiment of this application includes a sample data set, where the sample data set includes a sample image and a label image. The training data is stored in a database 230. The model training device 220 retrains a pre-trained neural network model based on the training data maintained in the database 230, to obtain an image processing model 201. The model training device 220 may be a terminal, for example, a mobile phone terminal, a tablet computer, a notebook computer, an AR/VR, a vehicle-mounted terminal, a monitoring device, a vehicle-mounted autonomous driving system, or an unmanned vending machine, or may be a server, a cloud, or the like. The image processing model 201 may be configured to input a to-be-processed picture into the image processing model 201 after related preprocessing, to obtain a model processing result corresponding to the to-be-processed picture. The image processing model 201 may be configured to implement various pixel-level tasks. It should be noted that, in an actual application, the training data maintained in the database 230 is not necessarily all collected by the data collection device 260, and may be received from another device, for example, a camera. In addition, it should be noted that, in an actual application, the training data maintained in the database 230 is not necessarily all collected by the data collection device 260, and may be received from another device. It should further be noted that the model training device 220 may not necessarily retrain the image processing model 201 completely based on the training data maintained in the database 230, or may obtain training data from a cloud or another place to perform model retraining. The foregoing descriptions should not be construed as a limitation on this embodiment of this application.

The image processing model 201 obtained by retraining based on the model training device 220 may be applied to different systems or devices, for example, applied to a terminal device 210 shown in FIG. 2. The terminal device 210 may be a terminal, for example, a mobile phone terminal, a tablet computer, a notebook computer, an AR/VR, a vehicle-mounted terminal, or a monitoring device, a vehicle-mounted autonomous driving system, an unmanned vending machine, or may be a server, a cloud, or the like. In FIG. 2, the terminal device 210 is configured with an I/O interface 212, and is configured to exchange data with an external device. A user may input data to the I/O interface 212 via a client device 240. The input data in this embodiment of this application may include a to-be-processed picture, which may be input by the user, or may be from a database. The client device 240 may be a picture obtaining device, for example, a camera.

Optionally, a preprocessing module 213 is configured to perform preprocessing based on the input data (for example, the to-be-processed picture) received by the I/O interface 212. In this embodiment of this application, the preprocessing module 213 is configured to perform preprocessing based on the input data (for example, the to-be-processed picture) received by the I/O interface 212, and preprocessed data enters a calculation module 211. In this embodiment of this application, the preprocessing module 213 may be configured to perform at least one of processing such as cropping and filtering on the to-be-processed picture, to obtain a to-be-processed picture that meets a requirement.

In a related processing process in which the terminal device 210 preprocesses the input data or the calculation module 211 of the terminal device 210 performs calculation, the terminal device 210 may invoke data, code, and the like in a data storage system 250 to perform corresponding processing, and may also store, into the data storage system 250, data, instructions, and the like obtained through corresponding processing.

Finally, the I/O interface 212 returns the model processing result of the to-be-processed picture to the client device 240, to provide the model processing result to the user. In this case, the client device 240 may be a display.

It should be noted that the model training device 220 may generate corresponding image processing models 201 for different targets or different tasks based on different training data. The corresponding image processing models 201 may be used to implement the foregoing targets or complete the foregoing tasks, to provide required results for the user.

In a case shown in FIG. 2, the user may manually give input data, and the manual giving may be performed in an interface provided by the I/O interface 212. In another case, the client device 240 may automatically send the input data to the I/O interface 212. If it is required that the client device 240 needs to obtain authorization from the user for automatically sending the input data, the user may set corresponding permission on the client device 240. The user may view, on the client device 240, a result output by the terminal device 210. Specifically, the result may be presented in a form of display, a sound, an action, or the like. The client device 240 may also serve as a data collector; collect, as new sample data, the input data that is input to the I/O interface 212 and an output result that is output from the I/O interface 212 shown in FIG. 2; and store the new sample data in the database 230. Certainly, the client device 240 may alternatively not perform collection, but the I/O interface 212 directly stores, as new sample data into the database 230, the input data that is input into the I/O interface 212 and the output result that is output from the I/O interface 212 that are shown in FIG. 2.

It should be noted that FIG. 2 is merely a diagram of a system architecture according to an embodiment of this application. A location relationship between a device, a component, a module, and the like shown in the figure constitutes no limitation. For example, in FIG. 2, the data storage system 250 is an external memory relative to the terminal device 210. In another case, the data storage system 250 may alternatively be disposed in the terminal device 210. In addition, the model training device 220 and the terminal device 210 may be a same device.

Embodiment 2

The following describes a feature extraction unit in detail.

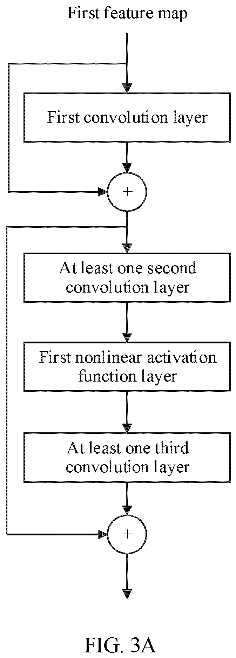

FIG. 3A is a diagram of a structure of a feature extraction unit according to an embodiment of this application.

The feature extraction unit includes a first nonlinear activation function layer, a first convolution layer, at least one second convolution layer, and at least one third convolution layer. The first nonlinear activation function layer is located between the at least one second convolution layer and the at least one third convolution layer.

The first convolution layer is configured to perform feature extraction on an input first feature map to obtain a second feature map, where a size of a convolution kernel of the first convolution layer is K*K, and K is greater than or equal to 7.

A third feature map is sequentially processed to obtain a fourth feature map by using the at least one second convolution layer, the first nonlinear activation function layer, and the at least one third convolution layer, where the third feature map is obtained by adding the first feature map and the second feature map; and

For example, sizes of convolution kernels of the second convolution layer and the third convolution layer are 1*1, 3*3, or 5*5.

Specifically, the at least one second convolution layer, the first nonlinear activation function layer, and the at least one third convolution layer may implement information exchange between channels, to improve feature extraction precision. When a convolution operation is performed on the at least one second convolution layer and the at least one third convolution layer, an inter-channel operation is performed, that is, weighted summation is performed between the channels, to implement information exchange between the channels.

The first nonlinear activation function layer is used between the at least one second convolution layer and the at least one third convolution layer, to improve a nonlinear fitting capability of a neural network. Specifically, the first nonlinear activation function layer non-linearizes the neural network, that is, improves the fitting capability of the neural network, so that a more complex function can be fitted. A nonlinear activation function is essential for a module to learn and understand a complex and nonlinear function. A nonlinear factor may be introduced by the nonlinear activation function. If the activation function is not used, an output signal is only a simple linear function. A linear function is a one-level polynomial. Complexity of a linear equation is limited, and a capability of learning complex function mapping from data is small. Without the activation function, the neural network cannot learn and simulate other complex types of data, such as an image video, an audio, and a voice. The nonlinear activation function can convert current feature space to another space through specific linear mapping, so that data can be better classified.

In addition, an output of the feature extraction unit is a feature map obtained by adding the third feature map and the fourth feature map.

In this embodiment of this application, the first convolution layer is disposed at a top layer of the feature extraction unit. Compared with the conventional technology in which a small-scale convolution layer is used, resulting in a small receptive field of feature extraction and poor processing performance of a model, in this application, the size of the convolution kernel of the first convolution layer is K*K, K is greater than or equal to 7, and a large-scale convolution kernel can be used to effectively improve a receptive field of the feature extraction unit, thereby improving performance of an image processing model that uses the feature extraction unit. In addition, the feature extraction unit has a simple network structure and is easy to implement. Further, in this embodiment of this application, a convolutional neural network architecture is used, and model hardware deployment is friendly, so that the model is more easily applied to a terminal side.

For example, an activation function, for example, Sigmoid, ReLU, PReLu, GELU, or Swish may be used at the first nonlinear activation function layer.

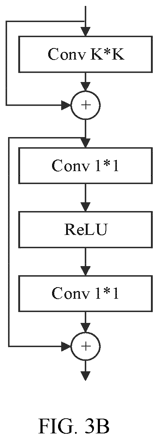

FIG. 3B is a diagram of a structure of another feature extraction unit according to an embodiment of this application. In FIG. 3B, for example, the first convolution layer is Conv K*K, and a ReLU function is used at the first nonlinear activation function layer. Sizes of convolution kernels of the second convolution layer and the third convolution layer are 1*1, the at least one second convolution layer is one second convolution layer (for example, first Conv 1*1 after the Conv K*K in FIG. 3B), and the at least one third convolution layer is one third convolution layer (for example, Conv 1*1 after a ReLU function layer in FIG. 3B).

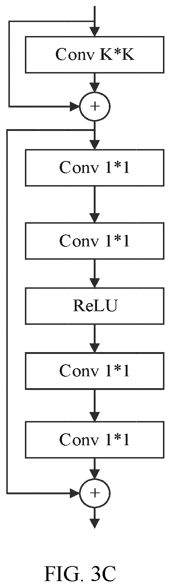

In a possible implementation, "a plurality of" means two or more. In this embodiment of this application, a plurality of second convolution layers and a plurality of third convolution layers are disposed, to further improve a capability of information exchange between the channels. For example, FIG. 3C is a diagram of a structure of another feature extraction unit according to an embodiment of this application. In FIG. 3C, for example, the first convolution layer is Conv K*K, and a ReLU function is used at the first nonlinear activation function layer. Sizes of convolution kernels of the second convolution layer and the third convolution layer are 1*1, the plurality of second convolution layers are two second convolution layers (for example, first two Conv 1*1 after the Conv K*K in FIG. 3C), and the plurality of third convolution layer are two third convolution layers (for example, two Conv 1*1 after a ReLU function layer in FIG. 3C).

In a possible implementation, the first convolution layer is a depthwise separable convolution layer or a group convolution layer.

In this embodiment of this application, the depthwise separable convolution layer or the group convolution layer can effectively reduce a computing amount and a quantity of parameters, to reduce computing power consumption. In this embodiment of this application, a specific form of the first convolution layer may be set based on a computing power limitation of specific hardware.

In a possible implementation, in this embodiment of this application, to further improve fitting effect of the network, a second nonlinear activation function layer may be inserted between any layers of the feature extraction unit. The second nonlinear activation function layer is located in a location of at least one of the following: before the first convolution layer, after the first convolution layer, before the at least one second convolution layer, between any two of the at least one second convolution layer, after the at least one third convolution layer, or between any two of the at least one third convolution layer.

For example, an activation function, for example, Sigmoid, ReLU, PReLu, GELU, or Swish may be used at the second nonlinear activation function layer.

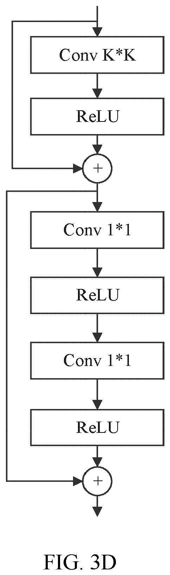

For example, FIG. 3D is a diagram of a structure of another feature extraction unit according to an embodiment of this application. In FIG. 3D, for example, the first convolution layer is Conv K*K, and ReLU functions are used at the first nonlinear activation function layer and the second nonlinear activation function layer. Sizes of convolution kernels of the second convolution layer and the third convolution layer are 1*1, for example, the at least one second convolution layer is one second convolution layer (for example, first Conv 1*1 after the Conv K*K in FIG. 3D), and for example, the at least one third convolution layer is one third convolution layer (for example, second Conv 1*1 after the Conv K*K in FIG. 3D). A ReLU function layer between the second convolution layer and the third convolution layer is the first nonlinear activation function layer. The second nonlinear activation function layer is a ReLU function layer after the Conv K*K and a ReLU function layer after the third convolution layer.

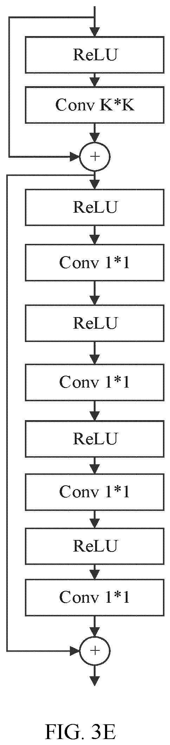

For another example, FIG. 3E is a diagram of a structure of another feature extraction unit according to an embodiment of this application. In FIG. 3E, for example, the first convolution layer is Conv K*K, and ReLU functions are used at the first nonlinear activation function layer and the second nonlinear activation function layer. Sizes of convolution kernels of the second convolution layer and the third convolution layer are 1*1, for example, the at least one second convolution layer is two second convolution layers (for example, first Conv 1*1 and second Conv 1*1 after the Conv K*K in FIG. 3E), and for example, the at least one third convolution layer is two third convolution layers (for example, third Conv 1*1 and fourth Conv 1*1 after the Conv K*K in FIG. 3E). A ReLU function layer between the second Conv 1*1 and the third Conv 1*1 is the first nonlinear activation function layer. The second nonlinear activation function layer is a ReLU function layer before the Conv K*K, a ReLU function layer before the first Conv 1*1 (which may be understood as a ReLU function layer disposed before the two second convolution layers), a ReLU function layer between the second Conv 1*1 and the second Conv 1*1, and a ReLU function layer between the third Conv 1*1 and the fourth Conv 1*1. FIG. 3D and FIG. 3E may also be combined. Details are not described herein again.

In a possible implementation, therefore, in this application, to prevent gradient explosion and gradient disappearance, a normalization layer may be set in any location in the feature extraction unit based on an actual requirement. The normalization layer is located in a location of at least one of the following: before the first convolution layer, after the first convolution layer, before the at least one second convolution layer, after the at least one second convolution layer, between any two of the at least one second convolution layer, before the at least one third convolution layer, after the at least one third convolution layer, or between any two of the at least one third convolution layer.

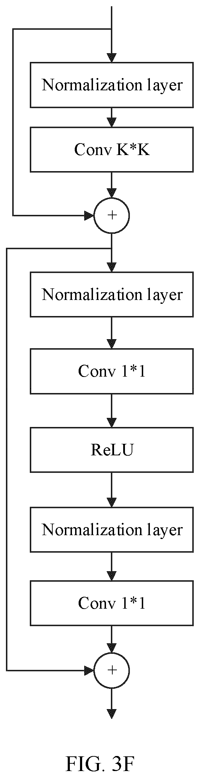

For example, FIG. 3F is a diagram of a structure of another feature extraction unit according to an embodiment of this application. In FIG. 3F, for example, the first convolution layer is Conv K*K, and a ReLU function is used at the first nonlinear activation function layer. Sizes of convolution kernels of the second convolution layer and the third convolution layer are 1*1, for example, the at least one second convolution layer is one second convolution layer (for example, first Conv 1*1 after the Conv K*K in FIG. 3F), and for example, the at least one third convolution layer is one third convolution layer (for example, second Conv 1*1 after the Conv K*K in FIG. 3F). A normalization layer is disposed before each convolution layer (the first convolution layer, the second convolution layer, and the third convolution layer).

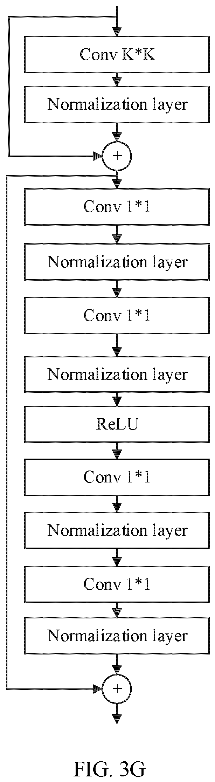

For another example, FIG. 3G is a diagram of a structure of another feature extraction unit according to an embodiment of this application. In FIG. 3G, for example, the first convolution layer is Conv K*K, and a ReLU function is used at the first nonlinear activation function layer. Sizes of convolution kernels of the second convolution layer and the third convolution layer are 1*1, for example, the at least one second convolution layer is two second convolution layers (for example, first Conv 1*1 and second Conv 1*1 after the Conv K*K in FIG. 3G), and for example, the at least one third convolution layer is two third convolution layers (for example, third Conv 1*1 and fourth Conv 1*1 after the Conv K*K in FIG. 3G). A normalization layer is disposed after the first convolution layer, after the second Conv 1*1 (which may be understood as being disposed after the two second convolution layers), between the second Conv 1*1 and the second Conv 1*1, after the fourth Conv 1*1 (which may be understood as being disposed after the two third convolution layers), and between the third Conv 1*1 and the fourth Conv 1*1. FIG. 3F and FIG. 3G may also be combined. Details are not described herein again.

Embodiment 3

The following describes an image processing model in detail.

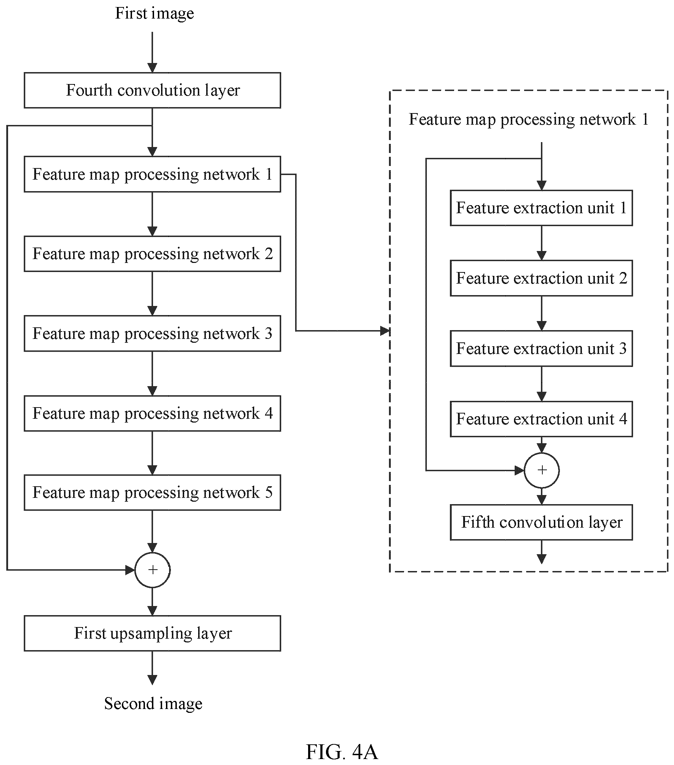

FIG. 4A is a diagram of a structure of an image processing model according to an embodiment of this application.

The image processing model includes a fourth convolution layer and at least one feature map processing network connected in series. The feature map processing network includes at least one feature map extraction unit connected in series, and the feature map extraction unit is the feature extraction unit. In FIG. 4A, for example, the at least one feature map processing network is connected in series is five feature map processing networks connected in series, and for example, the at least one feature map extraction unit connected in series is four feature extraction units connected in series.

The fourth convolution layer is configured to receive a first image and perform feature extraction on the first image to obtain a fifth feature map. The at least one feature map processing network connected in series is configured to process the fifth feature map to obtain a sixth feature map. An output of the image processing model is a seventh feature map, and the seventh feature map is a feature map obtained by adding the fifth feature map and the sixth feature map

In this embodiment of this application, the feature extraction unit whose receptive field is improved is applied to the image processing model, to improve performance of the image processing model. For example, a function implemented by the image processing model may include at least one of the following: noise reduction, demosaicing, deblurring, and super-resolution.

In a possible implementation, as shown in FIG. 4A, the feature map processing network further includes a fifth convolution layer, the fifth convolution layer is configured to perform feature extraction processing on an eighth feature map, and the eighth feature map is a feature map obtained by adding a feature map output by the at least one feature map extraction unit connected in series and a feature map input into the feature map processing network.

In this embodiment of this application, the fifth convolution layer is set in the feature map processing network to extract a small-scale feature, so that the image processing model can perceive a large-scale feature and the small-scale feature, thereby effectively improving model effect. For example, a size of a convolution kernel of the fifth convolution layer is 1*1, 3*3, or 5*5.

In a possible implementation, as shown in FIG. 4A, the image processing model further includes a first upsampling layer, configured to perform upsampling processing on the seventh feature map to obtain a second image.

Upsampling is actually scaling up an image, and refers to any technology that can make resolution of the image higher. Implementation methods of upsampling include deconvolution (Deconvolution, also referred to as transposed convolution), an uppooling (UnPooling) method, bilinear interpolation (various interpolation algorithms), and pixel unshuffle (Pixel Unshuffle). In this embodiment of this application, when resolution of an input image and resolution of an output image of the image processing model are different, the resolution of the image may be improved by using the first upsampling layer, and resolution of the second image is higher than resolution of the first image. For example, the first image is a RAW-domain image, and the second image is an RGB image.

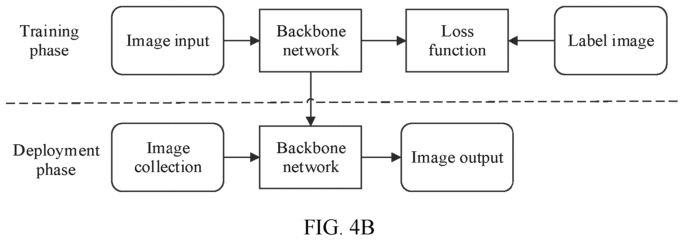

In this embodiment of this application, the feature extraction unit is used as a basic network structure unit, and the image processing model is obtained based on the basic network structure unit. Based on the basic network structure unit, stacking is performed based on a computing power limitation in an actual application to construct a backbone network of the image processing model in a pixel-level task, or a network structure search technology is used to search for a stacked form of the backbone network to obtain a backbone network form with final good effect. After the specific backbone network is obtained, the constructed backbone network is trained based on the training data, and a trained backbone network and a corresponding parameter are deployed on specific hardware for application. Specifically, FIG. 4B is a diagram of training and deployment of a backbone network according to an embodiment of this application. After the backbone network is obtained, a network parameter of the backbone network is trained based on an input image, label image data, and a specific loss function. In a training phase, an attribute of an input image-label image pair determines a specific task attribute. For example, if the input image is a noise image and the label image is a clean image, a network parameter obtained through training is used for image noise reduction. For another example, if the input image is a low-resolution image, and the label image is a high-resolution image, a network parameter obtained through training is used for image super-resolution. After the training ends, the network and the network parameter are further deployed on specific hardware (such as a mobile phone or a surveillance camera) for inference and application, and an image collected by a specific device is processed to obtain a processing result.

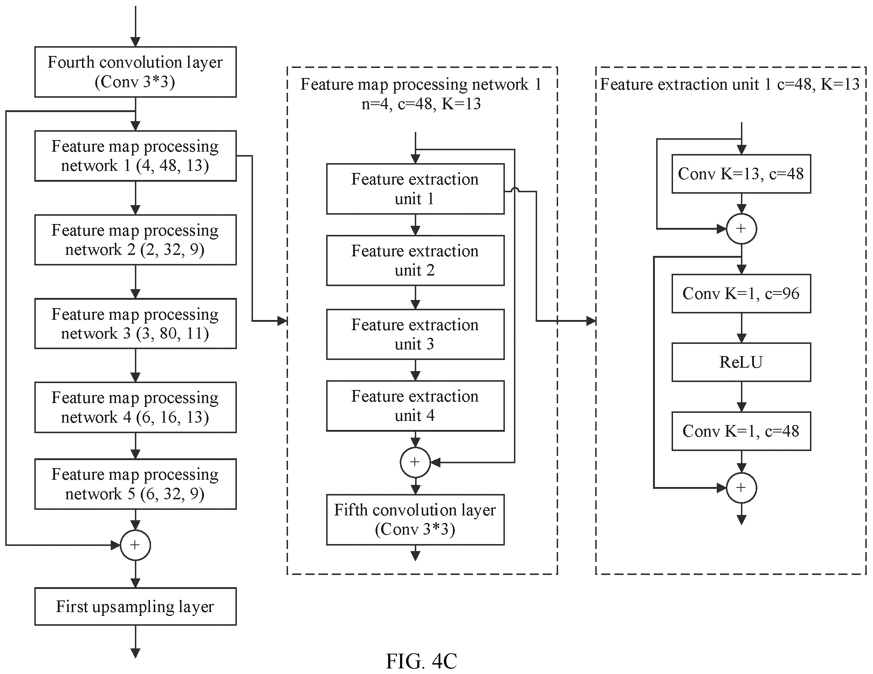

For the image processing model shown in FIG. 4A, the following uses a raw-domain image enhancement pixel-level network as an example for specific description. FIG. 4C is a diagram of a structure of another image processing model according to an embodiment of this application.

In FIG. 4C, an input of the raw-domain image enhancement pixel-level network is an image in a raw format, and an output is an RGB image. An objective of the network is to enable the output RGB image to implement functions such as denoising, moire removal, and texture enhancement. The network is usually deployed on a smartphone to process an image captured by a camera of the smartphone.

Implementation steps of the raw-domain image enhancement pixel-level network are as follows.

(1) The structure of the feature extraction unit shown in FIG. 3B is used.

(2) For the construction of the backbone network of the raw-domain image enhancement pixel-level network, a network structure search technology is used to search for a backbone network configuration, to obtain a backbone network shown on the left side of FIG. 4C. The backbone network includes a fourth convolution layer for performing shallow-layer feature processing on the input image, five feature map processing networks connected in series in the middle, and one first upsampling layer. Each feature map processing network has three key parameters n, c, and K, where n indicates a quantity of feature extraction units in the feature map processing network, c indicates a quantity of channels in the feature map processing network, and K indicates a specific size of a convolution kernel in the feature extraction unit. For example, 15 groups of parameters (five feature map processing blocks, and each feature map processing block has three parameters) are searched according to a network structure search method AutoBSS. FIG. 4C shows a finally found backbone network. For example, sizes of convolution kernels of the fourth convolution layer and the fifth convolution layer are 3*3. Parameters of the feature map processing networks are specifically as follows: parameters (n, c, K) of a feature map processing network 1 are (4, 48, 13), parameters (n, c, K) of a feature map processing network 2 are (2, 32, 9), parameters (n, c, K) of a feature map processing network 3 are (3, 80, 11), parameters (n, c, K) of a feature map processing network 4 are (6, 16, 13), and parameters (n, c, K) of a feature map processing network 5 are (6, 32, 9). In the feature extraction unit 1, a size of a convolution kernel of the first convolution layer is 13*13, and a quantity of channels is 48. A size of a convolution kernel of the second convolution layer is 1*1, and a quantity of channels is 96. For example, the first nonlinear activation function layer is a ReLU function layer. A size of a convolution kernel of the third convolution layer is 1*1, and a quantity of channels is 48.

(3) Based on the constructed backbone network, the network is trained based on a raw image data-RGB image data pair and an L1 loss function.

(4) After the training converges, the network structure and parameter are deployed on the mobile phone to implement raw-domain image enhancement.

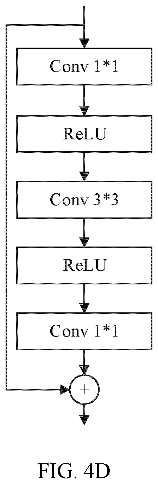

Compared with the conventional technology, in this embodiment of this application, the raw-domain image enhancement pixel-level network implements image enhancement by using a feature extraction unit whose receptive field is improved, so that an objective indicator can be effectively improved. As shown in Table 1, ResBlock is used as an example of the feature extraction unit in the conventional technology. For a specific structure of the ResBlock, refer to FIG. 4D. A backbone network is constructed according to the foregoing procedure, and objective effect of a backbone network corresponding to the ResBlock and objective effect of the backbone network corresponding to the feature extraction unit in this embodiment of this application are compared. A lower loss value is better, and a higher peak signal-to-noise ratio is better. It can be learned that in this embodiment of this application, a fitting capability is stronger, a loss value is lower than that of the ResBlock, and a peak signal-to-noise ratio (Peak Signal to Noise Ratio, PSNR) is higher.

Table 1 Counter comparison table

|  | Converged loss value | PSNR | Computing amount |
|---|---|---|---|
| ResBlock | $8.02e^{-3}$ | 38.89 | 5.46 G |
| This embodiment of this application | $7.53e^{-3}$ | 39.13 | 5.46 G |

In addition, compared with the conventional technology, subjective imaging quality of the raw-domain image enhancement pixel-level network in this embodiment of this application is also improved. In this embodiment of this application, more details can be restored from building details and textures, and there are fewer pseudo textures on some water surfaces.

In this embodiment of this application, the feature extraction unit is constructed based on a large-scale convolution kernel, and the receptive field of the feature extraction unit is larger than that of a conventional convolutional neural network. Therefore, image enhancement effect is better. In addition, a structure of the convolutional neural network is also maintained in a basic structure in this embodiment of this application, and hardware deployment of the convolutional neural network is easier.

In a possible implementation, when the at least one feature map processing network connected in series is at least two feature map processing networks connected in series, the model further includes at least one downsampling layer and at least one second upsampling layer, and a quantity of downsampling layers is the same as a quantity of second upsampling layers.

For each feature map processing network, a downsampling layer or a second upsampling layer is after the feature map processing networks.

Actually, a main purpose of downsampling is to reduce a spatial scale of the feature map. Therefore, in this application, the at least one downsampling layer can be set to reduce a computing amount of a feature map processing block after the downsampling layer. Correspondingly, the at least one second upsampling layer further needs to be set to restore a downsampled image to an original size, so that sizes of the output image and the input image remain unchanged. For example, the downsampling layer may be implemented by using a convolution layer, and a size of a convolution kernel of the convolution layer is not limited. For example, the size of the convolution kernel of the convolution layer is 3*3. A convolution kernel for downsampling is to obtain only a maximum value, an average value, and the like (maximum pooling, average pooling) at a corresponding location, and does not perform back propagation modification.

In a possible implementation, after the at least one downsampling layer and the at least one second upsampling layer are added, the image processing model may further include at least one cross-layer connection, and the cross-layer connection is used to add and fuse feature maps of a same size in the image processing model.

Therefore, in this application, the cross-layer connection is set to add and fuse the feature maps of the same size in the image processing model, to reduce training difficulty of an intermediate layer of the model.

The following uses three examples to describe in detail a case in which the downsampling layer, the second upsampling layer, and the cross-layer connection are added.

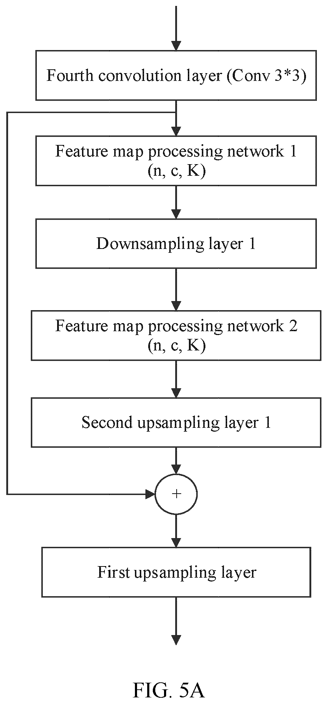

FIG. 5A is a diagram of a structure of another image processing model according to an embodiment of this application. In the image processing model of FIG. 4C, no downsampling is performed on the feature map, that is, full-size calculation is maintained. In FIG. 5A, a downsampling layer, that is, a downsampling layer 1, is included, and downsampling is performed on a feature map obtained through processing by the feature map processing network 1. A size of the feature map is reduced by four times, so that a computing amount of a next feature map processing network (that is, the feature map processing network 2) can be reduced. In addition, a second upsampling layer (that is, a second upsampling layer 1) is correspondingly added to the feature map processing network 2 to perform size recovery.

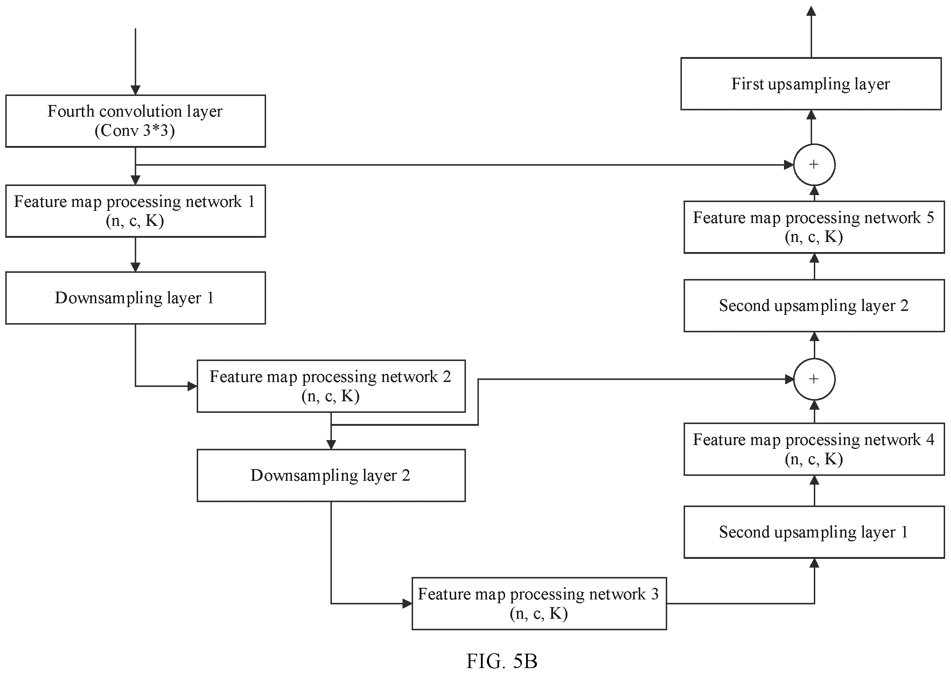

FIG. 5B is a diagram of a structure of another image processing model according to an embodiment of this application. In the image processing model of FIG. 4C, no downsampling is performed on the feature map, that is, full-size calculation is maintained. In FIG. 5B, there are two downsampling layers: a downsampling layer 1 and a downsampling layer 2. Each time downsampling is performed, a size of a feature map is reduced by four times (that is, from H*W to H/2*W/2). An advantage of this is to reduce a computing amount of a next feature map processing network. In addition, it is noted that a final output of a pixel-level task needs to be restored to an H*W size or even a 2H*2W size, and therefore two second upsampling layers (that is, a second upsampling layer 1 and a second upsampling layer 2) are correspondingly added to a subsequent feature map processing network. The second upsampling layer 1 is a second upsampling layer corresponding to the downsampling layer 1, and the second upsampling layer 2 is a second upsampling layer corresponding to the downsampling layer 2. In addition, feature maps of a same size in the image processing model may be correspondingly added (as shown in the addition on the lower right side in FIG. 5B, corresponding to a size of H/2*W/2), to form a cross-layer link, thereby reducing training difficulty of an intermediate layer. In FIG. 5B, two consecutive downsampling layers can effectively reduce the size of the feature map, thereby effectively reducing a computing amount of the feature map processing network 3.

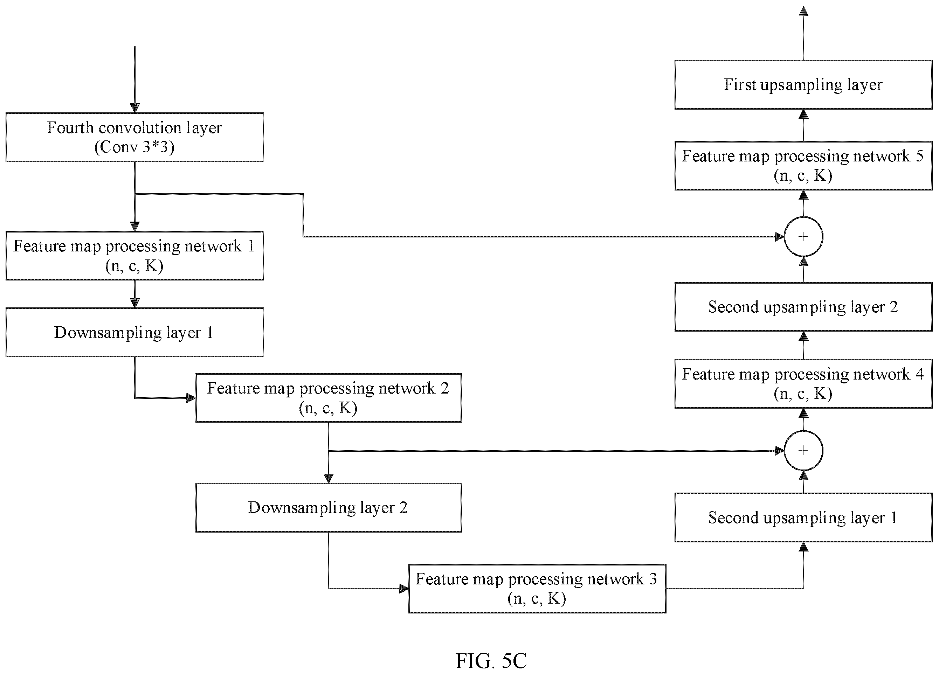

FIG. 5C is a diagram of a structure of another image processing model according to an embodiment of this application. Different from FIG. 5B, in two cross-layer connection locations, a feature map processed by the second upsampling layer 1 has a same size as a feature map processed by the feature map processing network 4, and a feature map processed by the second upsampling layer 2 has a same size as a feature map processed by the feature map processing network 5. Therefore, effect implemented in FIG. 5B and effect implemented in FIG. 5C are the same.

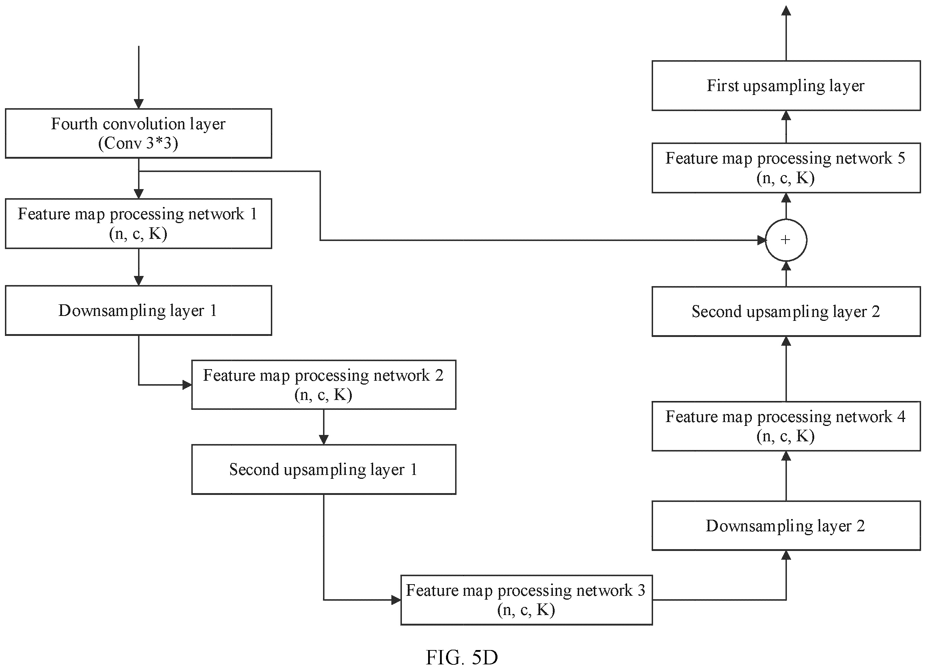

FIG. 5D is a diagram of a structure of another image processing model according to an embodiment of this application. Different from FIG. 5B and FIG. 5C, in FIG. 5D, after downsampling is performed at the downsampling layer 1, a second upsampling layer 1 is set to perform upsampling. The downsampling layer 2 and the second upsampling layer 2 are similar.

In FIG. 5A, FIG. 5B, FIG. 5C, and FIG. 5D, the first upsampling layer is an optional network layer. In addition, for example, a size of a convolution kernel of the fourth convolution layer is 3 *3.

The foregoing describes the feature extraction unit and the image processing model. The following describes the method provided in this application.

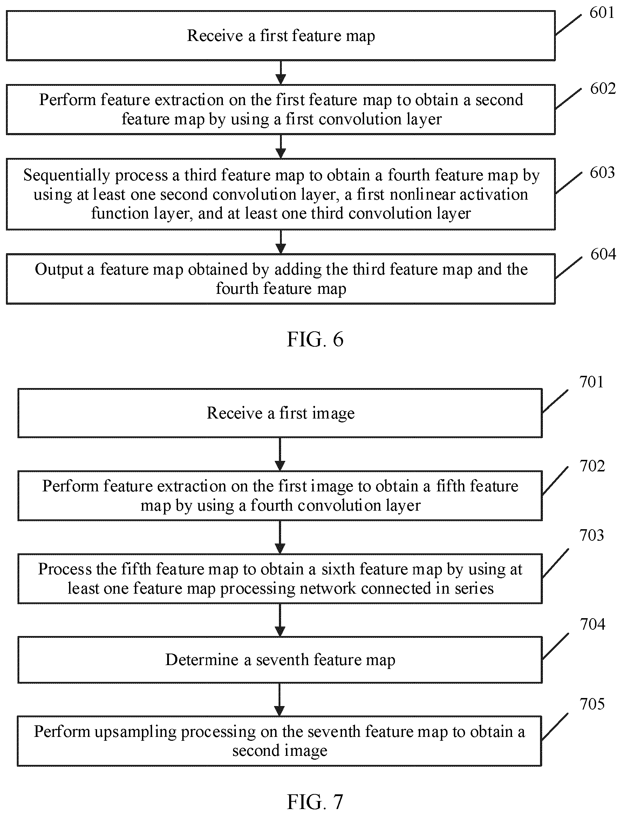

This application further provides a feature extraction method. FIG. 6 is a schematic flowchart of a feature extraction method according to an embodiment of this application.

The feature extraction method includes the following steps.

601: Receive a first feature map.

602: Perform feature extraction on the first feature map to obtain a second feature map by using a first convolution layer, where a size of a convolution kernel of the first convolution layer is K*K, and K is greater than or equal to 7.

603: Sequentially process a third feature map to obtain a fourth feature map by using at least one second convolution layer, a first nonlinear activation function layer, and at least one third convolution layer, where the third feature map is obtained by adding the first feature map and the second feature map.

604: Output a feature map obtained by adding the third feature map and the fourth feature map.

Compared with the conventional technology in which a small-scale convolution layer is used, resulting in a small receptive field of feature extraction, and poor processing performance of a model, in this embodiment of this application, the size of the convolution kernel of the first convolution layer is K*K, K is greater than or equal to 7, and a large-scale convolution kernel can be used to effectively improve a receptive field of a feature extraction unit, thereby improving performance of an image processing model that uses the feature extraction method.

The feature extraction method in this embodiment of this application corresponds to the feature extraction unit. Therefore, for related descriptions and beneficial effect, refer to the descriptions of the feature extraction unit. Details are not described again.

This application further provides an image processing method. FIG. 7 is a schematic flowchart of an image processing method according to an embodiment of this application.

The image processing method includes the following steps.

701: Receive a first image.

702: Perform feature extraction on the first image to obtain a fifth feature map by using a fourth convolution layer.

703: Process the fifth feature map to obtain a sixth feature map by using at least one feature map processing network connected in series, where the feature map processing network includes at least one feature map extraction unit connected in series, and the feature map extraction unit is the feature extraction unit according to any one of the foregoing embodiments.

704: Determine a seventh feature map, where the seventh feature map is a feature map obtained by adding the fifth feature map and the sixth feature map.

Therefore, in this embodiment of this application, the feature extraction unit whose receptive field is improved is applied to an image processing model, to improve performance of the image processing model.

In a possible embodiment, as shown in FIG. 7, the image processing method further includes the following steps: 705: Perform upsampling processing on the seventh feature map to obtain a second image.

The image processing method in this embodiment of this application corresponds to the image processing model. Therefore, for related descriptions and beneficial effect, refer to the descriptions of the image processing model. Details are not described again.

The foregoing describes the method provided in this application, and the following describes an apparatus provided in this application.

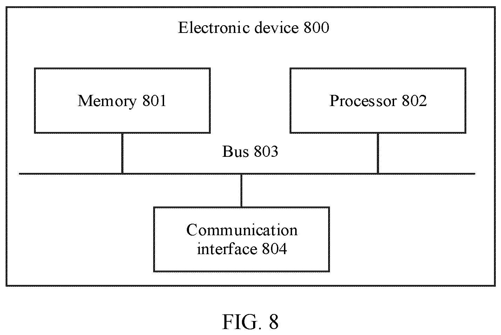

FIG. 8 is a diagram of a structure of an electronic device according to an embodiment of this application.

An electronic device 800 includes a memory 801, a processor 802, a communication interface 804, and a bus 803. The memory 801, the processor 802, and the communication interface 804 are communicatively connected to each other through the bus 803. There may be one or more memories 801, and there may be one or more processors 802.

For example, the electronic device 800 may be a chip or a chip system.

The memory 801 may be a read only memory (Read Only Memory, ROM), a static storage device, a dynamic storage device, or a random access memory (Random Access Memory, RAM). The memory 801 may store a program. When the program stored in the memory 801 is executed by the processor 802, the processor 802 is configured to perform steps of the feature extraction method or the image processing method according to any one of the foregoing embodiments.

The processor 802 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement the feature extraction method or the image processing method according to any one of the foregoing embodiments.

The processor 802 may be an integrated circuit chip and has a signal processing capability. In an implementation process, the steps of the feature extraction method or the image processing method according to any one of embodiments of this application may be completed by using a hardware integrated logic circuit in the processor 802 or instructions in a form of software. The foregoing processor 802 may be a general purpose processor, a digital signal processor (Digital Signal Processing, DSP), an application-specific integrated circuit (ASIC), a field programmable gate array (Field

EP 4 625 347 A1

Programmable Gate Array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the feature extraction method or the image processing method described with reference to any one of embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and completes the feature extraction method or the image processing method according to any one of the foregoing embodiments in combination with hardware of the processor 802.

The communication interface 804 uses a transceiver apparatus, for example, but not limited to, a transceiver, to implement communication between the electronic device 800 and another device or a communication network.

The bus 803 may include a path for transmitting information between components (for example, the memory 801, the processor 802, and the communication interface 804) of the electronic device 800.

It should be noted that although only the memory, the processor, and the communication interface of the electronic device 800 shown in FIG. 8 are illustrated, in a specific implementation process, a person skilled in the art should understand that the electronic device 800 further includes other components necessary for normal running. In addition, according to a specific requirement, a person skilled in the art should understand that the electronic device 800 may further include hardware components for implementing other additional functions. In addition, a person skilled in the art should understand that the electronic device 800 may include only components required for implementing embodiments of this application, but not necessarily include all the components shown in FIG. 8.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

This application further provides a terminal device, where the feature extraction unit runs on the terminal device, or the image processing model runs on the terminal device.

This application further provides a chip system, including: a processor, configured to invoke a computer program from a memory and run the computer program, so that a communication device installed with the chip system performs the foregoing feature extraction method or the image processing method.

Optionally, in an implementation, the chip system may further include a memory, and the memory stores the computer program.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A feature extraction unit, comprising a first nonlinear activation function layer, a first convolution layer, at least one second convolution layer, and at least one third convolution layer, wherein the first nonlinear activation function layer is located between the at least one second convolution layer and the at least one third convolution layer; and

   the first convolution layer is configured to perform feature extraction on an input first feature map to obtain a second feature map, wherein a size of a convolution kernel of the first convolution layer is K*K, and K is greater than or equal to 7;
   a third feature map is sequentially processed to obtain a fourth feature map by using the at least one second convolution layer, the first nonlinear activation function layer, and the at least one third convolution layer, wherein the third feature map is obtained by adding the first feature map and the second feature map; and
   an output of the feature extraction unit is a feature map obtained by adding the third feature map and the fourth feature map.

2. The feature extraction unit according to claim 1, wherein the first convolution layer is a depthwise separable convolution layer or a group convolution layer.

3. The feature extraction unit according to claim 1 or 2, wherein the feature extraction unit further comprises a second nonlinear activation function layer, and the second nonlinear activation function layer is located in a location of at least one of the following: before the first convolution layer, after the first convolution layer, before the at least one second convolution layer, between any two of the at least one second convolution layer, after the at least one third convolution layer, or between any two of the at least one third convolution layer.

4. The feature extraction unit according to any one of claims 1 to 3, wherein the feature extraction unit further comprises a normalization layer, and the normalization layer is located in a location of at least one of the following: before the first convolution layer, after the first convolution layer, before the at least one second convolution layer, after the at least one second convolution layer, between any two of the at least one second convolution layer, before the at least one third convolution layer, after the at least one third convolution layer, or between any two of the at least one third convolution layer.

5. An image processing model, comprising a fourth convolution layer and at least one feature map processing network connected in series, wherein the feature map processing network comprises at least one feature map extraction unit connected in series, and the feature map extraction unit is the feature extraction unit according to any one of claims 1 to 4; and

   the fourth convolution layer is configured to: receive a first image and perform feature extraction on the first image to obtain a fifth feature map, the at least one feature map processing network connected in series is configured to process the fifth feature map to obtain a sixth feature map, an output of the image processing model is a seventh feature map, and the seventh feature map is a feature map obtained by adding the fifth feature map and the sixth feature map.

6. The model according to claim 5, wherein the model further comprises a first upsampling layer, configured to perform upsampling processing on the seventh feature map to obtain a second image.

7. The model according to claim 5 or 6, wherein when the at least one feature map processing network connected in series is at least two feature map processing networks connected in series, the model further comprises at least one downsampling layer and at least one second upsampling layer, and a quantity of downsampling layers is the same as a quantity of second upsampling layers; and
   one downsampling layer or one second upsampling layer is after the feature map processing networks.

8. The model according to claim 7, wherein the model further comprises at least one cross-layer connection, and the cross-layer connection is used to add and fuse feature maps of a same size in the model.

9. The model according to any one of claims 5 to 8, wherein the feature map processing network further comprises a fifth convolution layer, the fifth convolution layer is configured to perform feature extraction processing on an eighth feature

EP 4 625 347 A1

map, and the eighth feature map is a feature map obtained by adding a feature map output by the at least one feature map extraction unit connected in series and a feature map input into the feature map processing network.

10. A feature extraction method, the method comprises:

receiving a first feature map;
performing feature extraction on the first feature map to obtain a second feature map by using a first convolution layer, wherein a size of a convolution kernel of the first convolution layer is K*K, and K is greater than or equal to 7;
sequentially processing a third feature map to obtain a fourth feature map by using at least one second convolution layer, a first nonlinear activation function layer, and at least one third convolution layer, wherein the third feature map is obtained by adding the first feature map and the second feature map; and
outputting a feature map obtained by adding the third feature map and the fourth feature map.

11. An image processing method, wherein the method comprises:

receiving a first image;
performing feature extraction on the first image to obtain a fifth feature map by using a fourth convolution layer;
processing the fifth feature map to obtain a sixth feature map by using at least one feature map processing network connected in series, wherein the feature map processing network comprises at least one feature map extraction unit connected in series, and the feature map extraction unit is the feature extraction unit according to any one of claims 1 to 4; and
determining a seventh feature map, wherein the seventh feature map is a feature map obtained by adding the fifth feature map and the sixth feature map.

12. An electronic device, comprising a processor and a memory, wherein the processor is connected to the memory, the memory is configured to store program code, and the processor is configured to invoke the program code, to perform the method according to claim 10 or 11.

13. A terminal device, wherein the feature extraction unit according to any one of claims 1 to 4 runs on the terminal device, or the model according to any one of claims 5 to 9 runs on the terminal device.

14. A computer-readable storage medium, wherein the computer-readable storage medium stores a computer program, and the computer program is executed by a processor, to implement the method according to claim 10 or 11.

15. A computer program product comprising instructions, wherein when the computer program product runs on a computer, the computer is enabled to perform the method according to claim 10 or 11.

FIG. 1A

FIG. 1B

FIG. 1C

FIG. 2

First feature map

First convolution layer

+

At least one second
convolution layer

First nonlinear activation
function layer

At least one third
convolution layer

+

FIG. 3A

FIG. 3B

FIG. 3C

FIG. 3D

FIG. 3E

```
                    ┌─────────────────────┐
              ┌────►│ Normalization layer  │
              │     └─────────────────────┘
              │                │
              │                ▼
              │     ┌─────────────────────┐
              │     │      Conv K*K        │
              │     └─────────────────────┘
              │                │
              │                ▼
              │              ╭───╮
              └─────────────►│ + │
                             ╰───╯
                               │
              ┌────────────────┤
              │                ▼
              │     ┌─────────────────────┐
              │     │ Normalization layer  │
              │     └─────────────────────┘
              │                │
              │                ▼
              │     ┌─────────────────────┐
              │     │      Conv 1*1        │
              │     └─────────────────────┘
              │                │
              │                ▼
              │     ┌─────────────────────┐
              │     │        ReLU          │
              │     └─────────────────────┘
              │                │
              │                ▼
              │     ┌─────────────────────┐
              │     │ Normalization layer  │
              │     └─────────────────────┘
              │                │
              │                ▼
              │     ┌─────────────────────┐
              │     │      Conv 1*1        │
              │     └─────────────────────┘
              │                │
              │                ▼
              │              ╭───╮
              └─────────────►│ + │
                             ╰───╯
                               │
                               ▼
```

FIG. 3F

FIG. 3G

First image

Fourth convolution layer

Feature map processing network 1

Feature map processing network 2

Feature map processing network 3

Feature map processing network 4

Feature map processing network 5

$+$

First upsampling layer

Second image

Feature map processing network 1

Feature extraction unit 1

Feature extraction unit 2

Feature extraction unit 3

Feature extraction unit 4

$+$

Fifth convolution layer

FIG. 4A

Training phase — Image input → Backbone network → Loss function ← Label image

Deployment phase — Image collection → Backbone network → Image output

FIG. 4B

Fourth convolution layer
(Conv 3*3)

Feature map processing
network 1 (4, 48, 13)

Feature map processing
network 2 (2, 32, 9)

Feature map processing
network 3 (3, 80, 11)

Feature map processing
network 4 (6, 16, 13)

Feature map processing
network 5 (6, 32, 9)

First upsampling layer

Feature map processing network 1
n=4, c=48, K=13

Feature extraction
unit 1

Feature extraction
unit 2

Feature extraction
unit 3

Feature extraction
unit 4

Fifth convolution layer
(Conv 3*3)

Feature extraction unit 1 c=48, K=13

Conv K=13, c=48

Conv K=1, c=96

ReLU

Conv K=1, c=48

FIG. 4C

FIG. 4D

Fourth convolution layer (Conv 3*3)

Feature map processing network 1
(n, c, K)

Downsampling layer 1

Feature map processing network 2
(n, c, K)

Second upsampling layer 1

+

First upsampling layer

FIG. 5A

EP 4 625 347 A1

```
                                                                    ┌─────────────────────────┐
                                                                    │  First upsampling layer  │
                                                                    └─────────────────────────┘
                                                                              ▲
┌─────────────────────────┐                                                   │
│   Fourth convolution layer │                                               ┌─┴─┐
│      (Conv 3*3)          │─────────────────────────────────────────────────│ + │
└─────────────────────────┘                                                  └─┬─┘
            │                                                                   ▲
            ▼                                                     ┌─────────────────────────────────┐
┌─────────────────────────────────┐                              │ Feature map processing network 5 │
│ Feature map processing network 1 │                             │          (n, c, K)               │
│          (n, c, K)               │                             └─────────────────────────────────┘
└─────────────────────────────────┘                                           ▲
            │                                                                   │
            ▼                                                     ┌─────────────────────────────────┐
┌─────────────────────────┐                                      │   Second upsampling layer 2      │
│   Downsampling layer 1  │                                      └─────────────────────────────────┘
└─────────────────────────┘                                                   ▲
            │                                                                   │
            │                                                                 ┌─┴─┐
            └──────────┐                            ┌─────────────────────────│ + │
                       ▼                            │                         └─┬─┘
        ┌─────────────────────────────────┐        │                           ▲
        │ Feature map processing network 2 │───────┘         ┌─────────────────────────────────┐
        │          (n, c, K)               │                 │ Feature map processing network 4 │
        └─────────────────────────────────┘                 │          (n, c, K)               │
                       │                                     └─────────────────────────────────┘
                       ▼                                                   ▲
        ┌─────────────────────────────────┐                               │
        │      Downsampling layer 2       │                 ┌─────────────────────────────────┐
        └─────────────────────────────────┘                 │    Second upsampling layer 1     │
                       │                                     └─────────────────────────────────┘
                       └──────────┐                                        ▲
                                  ▼                                        │
                  ┌─────────────────────────────────┐                     │
                  │ Feature map processing network 3 │─────────────────────┘
                  │          (n, c, K)               │
                  └─────────────────────────────────┘
```

FIG. 5B

First upsampling layer

Feature map processing network 5 (n, c, K)

Second upsampling layer 2

Feature map processing network 4 (n, c, K)

Second upsampling layer 1

Feature map processing network 3 (n, c, K)

Fourth convolution layer (Conv 3*3)

Feature map processing network 1 (n, c, K)

Downsampling layer 1

Feature map processing network 2 (n, c, K)

Downsampling layer 2

FIG. 5C

EP 4 625 347 A1

```
                                                      ┌──────────────────────────┐
                                                      │   First upsampling layer  │
                                                      └──────────────────────────┘
                                                                  ▲
            │                                                     │
            ▼                                         ┌──────────────────────────┐
┌──────────────────────────┐                          │ Feature map processing   │
│   Fourth convolution layer│                          │     network 5            │
│      (Conv 3*3)           │                          │     (n, c, K)            │
└──────────────────────────┘                          └──────────────────────────┘
            │                                                     ▲
            ▼                                                     │
┌──────────────────────────┐                                   ( + )
│ Feature map processing    │──────────────────────────────────▲ │
│     network 1             │                                     │
│     (n, c, K)             │                          ┌──────────────────────────┐
└──────────────────────────┘                          │  Second upsampling layer 2│
            │                                          └──────────────────────────┘
            ▼                                                     ▲
┌──────────────────────────┐                                     │
│   Downsampling layer 1    │                          ┌──────────────────────────┐
└──────────────────────────┘                          │ Feature map processing    │
            │                                          │     network 4             │
            ▼                                          │     (n, c, K)             │
┌──────────────────────────┐                          └──────────────────────────┘
│ Feature map processing    │                                    ▲
│     network 2             │                                     │
│     (n, c, K)             │                          ┌──────────────────────────┐
└──────────────────────────┘                          │   Downsampling layer 2    │
            │                                          └──────────────────────────┘
            ▼                                                     ▲
┌──────────────────────────┐                                     │
│  Second upsampling layer 1│               ┌──────────────────────────┐
└──────────────────────────┘               │ Feature map processing    │
            │                               │     network 3             │
            └──────────────────────────────▶│     (n, c, K)             │
                                            └──────────────────────────┘
```

FIG. 5D

Receive a first feature map — 601

Perform feature extraction on the first feature map to obtain a second feature map by using a first convolution layer — 602

Sequentially process a third feature map to obtain a fourth feature map by using at least one second convolution layer, a first nonlinear activation function layer, and at least one third convolution layer — 603

Output a feature map obtained by adding the third feature map and the fourth feature map — 604

FIG. 6

Receive a first image — 701

Perform feature extraction on the first image to obtain a fifth feature map by using a fourth convolution layer — 702

Process the fifth feature map to obtain a sixth feature map by using at least one feature map processing network connected in series — 703

Determine a seventh feature map — 704

Perform upsampling processing on the seventh feature map to obtain a second image — 705

FIG. 7

Electronic device 800

Memory 801

Processor 802

Bus 803

Communication interface 804

FIG. 8

## INTERNATIONAL SEARCH REPORT

| International application No. |
| --- |
| **PCT/CN2023/129884** |

| A. | CLASSIFICATION OF SUBJECT MATTER |
| --- | --- |

G06V10/40(2022.01)i

According to International Patent Classification (IPC) or to both national classification and IPC

| B. | FIELDS SEARCHED |
| --- | --- |

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 特征, 提取, 激活, 卷积, 深度, 分组, 归一化, 上采样, 下采样, 相加, 残差, 感受野, feature, extract, activation, convolution, depth, group, normalization, up sampling, down sampling, addition, residual, receptive field

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111950423 A (NO.52 RESEARCH INSTITUTE, CHINA ELECTRONICS TECHNOLOGY GROUP CORP. et al.) 17 November 2020 (2020-11-17) description, paragraphs 57-77 | 1-15 |
| Y | CN 115147932 A (BEIJING HARIBIT INTELLIGENT TECHNOLOGY CO., LTD.) 04 October 2022 (2022-10-04) description, paragraphs 69-156, and figures 1-9 | 1-15 |
| Y | CN 114627341 A (MEGVII TECHNOLOGY LIMITED et al.) 14 June 2022 (2022-06-14) description, paragraphs 44-68 | 1-15 |
| Y | CN 109118491 A (SHENZHEN INSTITUTE OF ADVANCED TECHNOLOGY) 01 January 2019 (2019-01-01) description, paragraphs 41-58, and figures 1-5 | 5-9,11-15 |
| A | CN 111968120 A (UNIVERSITY OF ELECTRONIC SCIENCE AND TECHNOLOGY OF CHINA) 20 November 2020 (2020-11-20) entire document | 1-15 |

☑ Further documents are listed in the continuation of Box C.   ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 January 2024** | **22 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/129884**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|----------------------|
| A | KR 20220158343 A (IUCF HYU) 01 December 2022 (2022-12-01) entire document | 1-15 |

Form PCT/ISA/210 (second sheet) (July 2022)

## INTERNATIONAL SEARCH REPORT
### Information on patent family members

International application No.

**PCT/CN2023/129884**

| Patent document cited in search report | | | Publication date (day/month/year) | Patent family member(s) | | | Publication date (day/month/year) |
|---|---|---|---|---|---|---|---|
| CN | 111950423 | A | 17 November 2020 | CN | 111950423 | B | 03 January 2023 |
| CN | 115147932 | A | 04 October 2022 | | None | | |
| CN | 114627341 | A | 14 June 2022 | | None | | |
| CN | 109118491 | A | 01 January 2019 | | None | | |
| CN | 111968120 | A | 20 November 2020 | CN | 111968120 | B | 15 March 2022 |
| KR | 20220158343 | A | 01 December 2022 | KR | 102526970 | B1 | 28 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211604986